**Europäisches Patentamt**

**European Patent Office**

**Office européen des brevets**

(19)

(11) Veröffentlichungsnummer: **0 033 001**
**B1**

(12) # EUROPÄISCHE PATENTSCHRIFT

(45) Veröffentlichungstag der Patentschrift:
**13.04.83**

(51) Int. Cl.³: **C 09 J 3/14,** C 08 F 220/12

(21) Anmeldenummer: **80107892.4**

(22) Anmeldetag: **13.12.80**

(54) **Anaerob härtende Klebstoffe und Dichtungsmassen.**

(30) Priorität: **24.12.79 DE 2952286**

(43) Veröffentlichungstag der Anmeldung:
**05.08.81 Patentblatt 81/31**

(45) Bekanntmachung des Hinweises auf die Patenterteilung:
**13.04.83 Patentblatt 83/15**

(84) Benannte Vertragsstaaten:
**AT BE CH DE FR GB IT LI NL SE**

(56) Entgegenhaltungen:
**keine**

(73) Patentinhaber: **Henkel Kommanditgesellschaft auf Aktien, Postfach 1100 Henkelstrasse 67, D-4000 Düsseldorf 1 (DE)**

(72) Erfinder: **Gruber, Werner, Dr., Oppelner Weg 7, D-4000 Düsseldorf 12 (DE)**

## Anaerob härtende Klebstoffe und Dichtungsmassen

Die Erfindung betrifft unter Sauerstoffausschluß beschleunigt erhärtende Systeme auf Basis von (Meth)-acrylsäureestern und organischen Hydroperoxiden, die als anaerobe Klebstoffe, Dichtungsmittel und dergleichen bekannt sind. Sie werden vorzugsweise in lösungsmittelfreier Form für die genannten Zwecke verwendet.

Als wesentliche Bestandteile enthalten diese Systeme monomere oder oligomere (Methy)-acrylsäureester von ein- oder mehrwertigen Alkoholen sowie Peroxid beziehungsweise Hydroperoxid. Damit bei Ausschluß von Sauerstoff eine genügend schnelle Härtung einsetzt, fügt man den Systemen Beschleuniger zu.

Es ist bekannt, als Beschleuniger bestimmte Schwefel und/oder Stickstoff enthaltende organische Verbindungen zu verwenden. Mit derartigen Verbindungen erzielt man nach nicht allzu langer Zeit eine Festigkeit, die das Hantieren mit den verbundenen Gegenständen erlaubt. Sie wird meist nach der sogenannten Handfestigkeitsprüfung beurteilt. Zur Durchführung der Probe werden mehrere Tropfen der anaerob härtenden Massen zum Beispiel auf die Gewindegänge einer entfetteten Schraube aufgebracht und diese anschließend mit der dazugehörenden Mutter verschraubt.

Von Zeit zu Zeit wird die Mutter etwas gegen die Schraube gedreht und die Zeit bestimmt, bis sich die Mutter nicht mehr von Hand drehen läßt; sie wird als Maß für die Handfestigkeit verwendet.

Von größerer Aussagekraft für den Einsatz der anaerob härtenden Klebestoffe oder Dichtungsmittel ist aber die Zeit, die benötigt wird, bis eine Drehkraft von mindestens 500 Ncm zum Aufdrehen der verklebten Schrauben notwendig ist.

Aufgabe der vorliegenden Erfindung war es, solche Beschleuniger zu finden, die nach Zusammenfügen der zu verbindenden Teile sehr schnell zu einer kraftschlüssigen Verbindung führen, darüber hinaus aber nicht die Lagerbeständigkeit der Klebstoffe bzw. Dichtungsmittel ungünstig beeinflussen.

Erfindungsgemäß enthalten die neuen anaerob härtenden Klebstoff- und Dichtungssysteme auf Basis von (Meth)-acrylsäureestern Cyanessigsäure bzw. Ester oder Amide der Cyanessigsäure.

Zweckmäßig werden die Cyanessigsäure bzw. die genannten Derivate in einer Menge von 0,01 bis 10 Gewichtsprozent, insbesondere 0,1 bis 5 Gewichtsprozent, bezogen auf die (Meth)-acrylsäureester, eingesetzt. Ein leicht zu ermittelndes Kriterium für die Brauchbarkeit der Derivate der Cyanessigsäure ist die hinreichende Menge Löslichkeit im System und kein negativer Einfluß auf die Stabilität der anaeroben Mischungen.

Werden Ester der Cyanessigsäure eingesetzt, so soll die alkoholische Komponente aus einem aliphatischen bzw. aromatischen Rest, der auch elektronegative Substituenten enthalten kann, mit 1 bis 20 Kohlenstoffatomen bestehen. So kommen beispielsweise infrage der Methyl- oder Butyl- oder Cyclohexylester, der Decyl- oder Hexadecylester, welche auch mit 1−3 Chlor- oder Bromatomen substituiert sein können. Geeignet als alkoholische Esterkomponente sind z. B. Nitroethanol oder die isomeren Nitrobutanole. Unter den phenolischen Esterkomponenten sind neben dem Phenol bzw. $\alpha$- und $\beta$-Naphthol deren o- und p-Substitionsprodukte zu nennen, wobei als Substituenten neben Halogen (insbesondere Chlor und/oder Brom), insbesondere die Nitrogruppe bzw. Sulfonsäuregruppe infrage kommen. Geeignete phenolische Esterkomponenten sind also p-Nitrophenol, o-Chlor-p-nitrophenol, o,p-Dinitrophenol, und 2,4-Dinitronaphthol, wie auch die 4- bzw. 8-Naphtholsulfonsäure und 6- bzw. 7- bzw. 8-Naphthol($\beta$)sulfonsäure. Auch p-Nitrobenzylalkohol bzw. ähnlich gebaute Substanzen kommen in Frage.

Für den erfindungsgemäßen Zweck ist das Cyanessigsäureamid selbst ein typischer geeigneter Vertreter. Die Amidgruppierung kann vorteilhaft auch aus einem aliphatischen Rest, der auch durch Heteroatome unterbrochen und/oder über den Amidstickstoff zu einem Ring geschlossen sein kann, bestehen, wobei die Zahl der Kohlenstoffatome bis zu 18, vorzugsweise zwischen 2 und 8 beträgt. Geeignete Cyanessigsäureamide sind z. B. Cyanessigsäuremonomethylamid, -dimethylamid, -diethylamid, -dibutylamid, -cyclohexylamid, -octylamid, -morpholid, -pyrrolidid.

Die erfindungsgemäß einzusetzenden Cyanessigsäure bzw. deren Derivate lassen sich prinzipiell in allen sogenannten anaerob härtenden Klebstoffen und Dichtungsmassen verwenden. Derartige Systeme sind aufgebaut beispielsweise aus (Meth)-acrylsäureestern von mehrwertigen Alkoholen, wie Ethylenglykol, Diethylenglykol, Triethylenglykol, Tetraethylenglykol, Polyethylenglykol, Glycerin, Pentandiol, Di-, Tri- oder Tetrapropylenglykol oder auch den (Meth)-acrylsäureestern von isomeren Di-(hydroxymethyl)-tricyclodecanen bzw. deren Derivaten, welche durch Umsetzung mit Dicarbonsäureanhydriden im Molverhältnis 1 : 2 und anschließende vollständige Reaktion der Carboxylgruppen mit Glycidylmethacrylat herstellbar sind (Vergleiche DE-PS 2 714 538). Weiterhin kommen infrage (Meth)-acrylsäureester von Tetrahydrofurfurylalkohol oder Cyclopentanol oder Cyclohexanol. Eine weitere Gruppe anaerob härtender Klebstoffe stellen die Umsetzungsprodukte aus Glycidylethern mehrwertiger Phenole mit Acrylsäure bzw. Methacrylsäure dar.

Als Monomere kommen weiterhin die Di-(meth)-Acrylsäureester von ethoxyliertem oder propoxyliertem Diphenylolpropan sowie die Umsetzungsprodukte von Bishalbestern der Diolen wie Butandiol mit Glycidylmethacrylat entsprechend DE-AS 2 607 962 infrage.

2

Ein weiterer wesentlicher Bestandteil der anaerob härtenden Systeme sind die Peroxidinitiatoren. Es handelt sich hier in erster Linie um Hydroperoxide, die sich von Kohlenwasserstoffen ableiten, welche eine Kettenlänge von 3 bis 18 Kohlenstoffatomen aufweisen. Beispielsweise sind geeignet Cumolhydroperoxid, tert.-Butylhydroperoxid, Methylethylketonhydroperoxid, Diisopropylbenzolhydroperoxid. Weiter sind auch solche Peroxide geeignet, die bei einer Temperatur zwischen etwa 80 und 140°C eine Halbwertzeit von 10 Stunden haben. Demnach kommen in Betracht tert.-Butylperbenzoat, Di-tert.-butyldiperoxyphthalat, 2,5-Dimethyl-2,5-bis-(tert.-butylperoxy)-hexan, Bis-(1-hydroxy-cyclohexyl)-peroxid, tert.-Butylperoxyacetat, 2,5-Dimethylhexyl-2,5-di-(peroxybenzoat), tert.-Butylvaleroylperoxid, 2,2-Bis-(tert.-butylperoxy)-butan und Di-tert.-butylperoxid.

Die Peroxide sollen in einer Menge von 0,1 bis 20%, insbesondere 1,0 bis 10%, bezogen auf das Gesamtgemisch, vorhanden sein. Sie werden meist als phlegmatisierte Lösungen oder Pasten eingesetzt, d. h. mit einem relativ geringen Gehalt an inerten Substanzen wie Dimethylphthalat oder Cumol.

Gemäß einer weiteren bevorzugten Ausführungsform der vorliegenden Erfindung kann zusätzlich ein organisches Amin als Hilfsbeschleuniger zusammen mit den erfindungsgemäßen Beschleunigern verwendet werden.

Als Hilfsbeschleuniger seien N,N-Dimethyl-o-toluiden, N,N-Dimethyl-p-toluidin und Tri-n-butylamin erwähnt. Sie sollen nur in untergeordneter Menge von 0,1 bis maximal 1,5 Gewichtsprozent verwendet werden.

Schließlich können den erfindungsgemäßen Klebstoffen und Dichtungsmitteln auch Verdickungsmittel, Weichmacher, anorganische Füllstoffe und Farbstoffe zugesetzt werden. Als Verdickungsmittel sind geeignet polymere Verbindungen, wie etwa Polymethylmethacrylat, Polyethylacrylat, Polystyrol, Polyvinylchlorid, synthetischer Kautschuk und dergleichen. Als Füllstoffe eignen sich beispielsweise feinverteiltes Siliciumdioxid, Silikate, Bentonite, Calciumcarbonat, Titandioxid.

Die erfindungsgemäßen Klebstoffe und Dichtungsmassen lassen sich in nur teilweise gefüllten Flaschen aus Glas, Polyethylen oder dergleichen monatelang unverändert aufbewahren. Ein relativ geringer Sauerstoffpartialdruck ist ausreichend, um die Polymerisation zu inhibieren. Es hat sich, wie in anderen Fällen, auch hier als zweckmäßig erwiesen, die Flaschen so einzufärben, daß kurzwelliges Licht ferngehalten wird. Die Stabilität wird daher günstig beeinflußt. Auch kann eine Stabilisierung in bekannter Weise durch Zusatz organischer Persäuren wie Peressigsäure erfolgen.

Die anaerob härtenden Klebstoffe finden in der Technik Anwendung zum Verkleben von Blechen bzw. Metallteilen aus verschiedensten Materialien oder auch zur Befestigung von Gewinden, zum Abdichten von Rohrverbindungen und dergleichen mehr. Durch die erfindungsgemäße Kombination ist es nicht erforderlich, auch bei relativ inaktiven Metalloberflächen noch einen zusätzlichen Beschleuniger aufzubringen. Selbstverständlich ist es möglich, auch mit an sich bekannten Hilfsmitteln, beispielsweise durch geringes Erwärmen, die Aushärtung zu beschleunigen.

Im allgemeinen werden bei Anwendung der erfindungsgemäßen anaeroben Klebstoffe bereits nach wenigen Minuten sogenannte handfeste Verbindungen erreicht. Hervorzuheben ist, daß die Zeit zur Erreichung einer wirklichen Festigkeit, die eine praktische Handhabung ermöglicht, nämlich ein Drehkraftmoment von mindestens 500 Ncm zum Aufdrehen von Schraubverbindungen, zwischen ca. 10 und 30 Minuten liegt.

Die neuen anaerob härtenden Klebstoffe wurden untersucht auf:

A) Handfestigkeit,
B) Zeitdauer bis zum Erreichen eines Drehmoments von 500 Ncm,
C) Festigkeit nach 60 Minuten und 24 Stunden,
D) Stabilität.


A) Handfestigkeitsprüfung


Bei der Handfestigkeitsprüfung werden mehrere Tropfen der anaerob härtenden Masse auf die Gewindegänge einer entfetteten Messingschraube (M 10 × 30 DIN 933) aufgebracht und anschließend mit der dazugehörenden Mutter zusammengeschraubt. Von Zeit zu Zeit wird die Mutter etwas gegen die Schraube gedreht, um festzustellen, von welcher Zeit an die Mutter sich nicht mehr ohne besondere Kraftanstrengung von Hand auf der Schraube drehen läßt. Die bis dahin verstrichene Zeitspanne wird als Maß für die Handfestigkeit angesehen.


B) Zeitdauer bis zum Erreichen eines Drehmoments von wenigstens 500 Ncm


Die Festigkeitsprüfung wird an entfetteten Eisenschrauben (M 10 × 30 DIN 933 — 8.8) und Muttern durchgeführt. Nach dem Zusammenfügen der mit einigen Tropfen Klebstoff versehenen Schraube mit der dazu passenden Mutter wird in Abständen von einigen Minuten mit einem Drehmomentschlüssel die zum Aufdrehen der Klebverbindung notwendige Drehkraft bestimmt. Als Maß für die Festigkeit wird die Zeit angesehen, nach der eine Drehkraft von 500 Ncm oder mehr gefunden wurde.

## C) Festigkeit nach 60 Minuten und 24 Stunden

An verklebten Eisenschrauben und Muttern wurde nach 60minütiger und 24stündiger Lagerung bei Raumtemperatur mittels eines Drehmomentschlüssels die Drehkraft im Nm bestimmt, die zum Aufdrehen der Klebung benötigt wird.

Außerdem wurde an verklebten Stahlbolzen und Stahlscheiben nach DIN-Entwurf 54 452 die Druckscherfestigkeit nach 24stündiger Raumtemperaturaushärtung bestimmt.

## D) Stabilität

Bei der Stabilitätsprüfung wurde ein 10 cm langes und 10 mm weites Reagenzglas zu 9/10 mit den Mischungen gefüllt und in ein auf 80° C gehaltenes Bad eingehängt. Die Zeitspanne vom Einhängen bis zur ersten Gelbildung wurde gemessen.

## Beispiel 1

100 g Triethylenglycoldimethacrylat (200 ppm Hydrochinon enthaltend) wurden nacheinander mit 1 g Cyanessigsäure, 1 g N,N-Dimethyl-p-toluidin, 3 g Cumolhydroperoxid (70%ig in Cumol) und 1 g Peressigsäure (40%ig in Essigsäure) versetzt. Diese anaerob härtende Klebemischung zeigte bei 80° C eine Stabilität von über 30 Minuten. Verklebte Schrauben und Muttern waren nach 5 Minuten handfest. An Festigkeiten wurden folgende Werte erzielt:

| | |
|---|---|
| Drehkraftmoment nach 60 Minuten | 20 Nm |
| Drehkraftmoment nach 24 Stunden | 58 Nm |
| Druckscherfestigkeit nach 24 Stunden | 20 N/mm² |

## Beispiel 2

50 g eines Dimethacrylates aus Bis(dihydroxymethyltricyclo[5,2,1,0 2,6]-decan)maleinat und Glycidylmethacrylat sowie 50 g Triethylenglycol-dimethacrylat wurden nacheinander mit 1 Cyanessigsäure, 0,5 g N,N-Dimethyl-p-toluidin, 3 g Cumolhydroperoxid (70%ig in Cumol) und 0,5 g Peressigsäure (40%ig in Essigsäure) versetzt. Diese anaerob härtende Klebemischung zeigte folgende Eigenschaften:

| | |
|---|---|
| Stabilität bei 80° C | > 30 Min. |
| Handfestigkeit nach 3 Min. | |
| 500 Ncm Drehkraftmoment | 25 Min. |
| Drehkraftmoment nach 60 Min. | 15 Nm |
| Drehkraftmoment nach 24 Stunden | 60 Nm |
| Druckscherfestigkeit nach 24 Stunden | 25 N/mm² |

## Beispiel 3

50 g eines Dimethacrylates von propoxyliertem Diphenylolpropan und 50 g Hydroxyethylmethacrylat wurden nacheinander mit 0,5 g Cyanessigsäure, 0,25 g N,N-Dimethyl-p-toluidin und 3 g Cumolhydroperoxid (70%ig in Cumol) versetzt. Diese anaerob härtende Klebemischung zeigte folgende Eigenschaften:

| | |
|---|---|
| Stabilität bei 80° C | > 30 Min. |
| Handfestigkeit nach 5 Min. | |
| 500 Ncm Drehkraftmoment | 15 Min. |
| Drehkraftmoment nach 60 Min. | 20 Nm |
| Drehkraftmoment nach 24 Stunden | 52 Nm |
| Druckscherfestigkeit nach 24 Stunden | 21 N/mm² |

## Beispiel 4

50 g eines Dimethacrylates von propoxyliertem Diphenylolpropan und 50 g Hydroxyethylmethacrylat wurden nacheinander mit 1 g Cyanessigsäureamid, 1 g N,N-Dimethyl-p-toluidin und 3 g Cumolhydroperoxid (70%ig in Cumol) versetzt. Diese anaerob härtende Klebemischung zeigte folgende Eigenschaften:

| | |
|---|---|
| Stabilität bei 80°C | >30 Min. |
| Handfestigkeit nach 10 Min. | |
| 500 Ncm Drehkraftmoment | 30 Min. |
| Drehkraftmoment nach 24 Stunden | 50 Nm |
| Druckscherfestigkeit nach 24 Stunden | 18 N/mm² |

## Beispiel 5

100 g Triethylenglykoldimethacrylat (200 ppm Hydrochinon enthaltend) wurden nacheinander mit 2 g Cyanessigsäurediethylamid, 1 g N,N-Dimethyl-p-toluidin und 2 g Cumolhydroperoxid (70%ig in Cumol) versetzt. Diese anaerob härtende Klebemischung zeigte folgende Eigenschaften:

| | |
|---|---|
| Stabilität bei 80°C | >30 Min. |
| Handfestigkeit nach 10 Min. | |
| 500 Ncm Drehkraftmoment | 30 Min. |
| Drehkraftmoment nach 24 Stunden | 46 Nm |
| Druckscherfestigkeit nach 24 Stunden | 15 N/mm² |

## Beispiel 6

100 g Triethylenglycoldimethylacrylat (200 ppm Hydrochinon enthaltend) wurden nacheinander mit 2 g Cyanessigsäurepyrolidid, 1 g N,N-Dimethyl-p-toluidin und 3 g Cumolhydroperoxid (70%ig in Cumol) versetzt. Diese anaerob härtende Klebemischung zeigte folgende Eigenschaften:

| | |
|---|---|
| Stabilität bei 80°C | >30 Min. |
| Handfestigkeit nach 10 Min. | |
| 500 Ncm Drehkraftmoment | 45 Min. |
| Drehkraftmoment nach 24 Stunden | 40 Nm |
| Druckscherfestigkeit nach 24 Stunden | 15 N/mm² |

## Beispiel 7

50 g eines Dimethacrylates von propoxyliertem Diphenylolpropan A und 50 g Hydroxyethylmethacrylat wurden nacheinander mit 1 g Cyanessigsäuremorpholid, 1 g N,N-Dimethyl-p-toluidin und 3 g Cumolhydroperoxid (70%ig in Cumol) versetzt. Diese anaerob härtende Klebemischung zeigte folgende Eigenschaften:

| | |
|---|---|
| Stabilität bei 80°C | >30 Min. |
| Handfestigkeit nach 10 Min. | |
| 500 Ncm Drehkraftmoment | 45 Min. |
| Drehkraftmoment nach 24 Stunden | 67 Nm |
| Druckscherfestigkeit nach 24 Stunden | 25 N/mm² |

## Patentansprüche

1. Anaerob härtende Klebstoffe und Dichtungsmassen auf der Basis von (Meth)-acrylsäureestern und organischen Peroxiden, insbesondere Hydroperoxiden, und Stickstoff enthaltenden Verbindungen als Beschleuniger für die Polymerisation sowie üblichen Hilfsstoffen, gekennzeichnet durch einen Gehalt an Cyanessigsäure bzw. deren Estern oder Cyanessigsäureamiden.

2. Anaerob härtende Klebstoffe und Dichtungsmittel nach Anspruch 1, in denen die alkoholische Komponente der Estergruppierung aus einem aliphatischen bzw. aromatischen Rest, der elektronegative Substituenten enthalten kann, mit 1 bis 20 Kohlenstoffatomen besteht.

3. Anaerob härtende Klebstoffe und Dichtungsmassen nach Anspruch 1, in der die Amidgruppierung aus einem aliphatischen Rest, der auch durch Heteroatome unterbrochen und/oder über den Amidstickstoff zu einem Ring geschlossen sein kann, besteht, wobei die Zahl der Kohlenstoffatome bis zu 18, vorzugsweise zwischen 2 und 8 beträgt.

4. Anaerob härtende Klebstoffe und Dichtungsmassen nach einem der Ansprüche 1 bis 3, dadurch gekennzeichnet, daß die Cyanessigsäure oder deren Ester bzw. Amid in einer Menge von 0,01 bis 10 Gewichtsprozent, insbesondere 0,1 bis 5 Gewichtsprozent, bezogen auf (Meth)-acrylsäureester, vorliegt.

5. Anaerob härtende Klebstoffe und Dichtungsmassen nach einem der Ansprüche 1 bis 4, gekennzeichnet durch einen zusätzlichen Gehalt an organischen Aminen als Hilfsbeschleuniger.

## Claims

1. Anaerobically hardening adhesives and sealing compounds based on (meth)acrylic acid esters and organic peroxides, particularly hydroperoxides, and nitrogen-containing compounds as accelerators for the polymerisation reaction and standard auxiliaries, characterized in that they contain cyanoacetic acid or esters thereof or cyanoacetic acid amides.

2. Anaerobically hardening adhesives and sealing compounds as claimed in Claim 1 in which the alcoholic component of the ester group consists of an aliphatic or aromatic radical $(C_1 - C_{20})$ which may contain electronegative substituents.

3. Anaerobically hardening adhesives and sealing compounds as claimed in Claim 1 in which the amide group consists of an aliphatic radical which may even be interrupted by hetero atoms and/or closed via the amide nitrogen to form a ring, the number of carbon atoms amounting to at most 18 and preferably to between 2 and 8.

4. Anaerobically hardening adhesives ans sealing compounds as claimed in any of Claims 1 to 3, characterized in that the cyanoacetic acid or its ester or amide is present in a quantity of from 0.01 to 10% by weight and more particularly in a quantity of from 0.1 to 5% by weight, based on (meth)-acrylic acid ester.

5. Anaerobically hardening adhesives and sealing compounds as claimed in any of Claims 1 to 4, characterized in that they additionally contain organic amines as auxiliary accelerators.

## Revendications

1. Colles et masses d'étanchéité à durcissement anaérobie à base d'esters (méth)acryliques et de peroxydes organiques, en particulier d'hydroperoxydes, et de composés contenant de l'azote en tant qu'accélérateurs de polymérisation, et de produits auxiliaires usuels, caractérisées en ce qu'elles contiennent de l'acide cyanacétique ou leurs esters ou des cyanacétamides.

2. Colles et masses d'étanchéité à durcissement anaérobie selon la revendication 1, dans lesquelles le composant alcoolique du groupement ester consiste en un reste aliphatique ou aromatique qui peut porter des substituants électronégatifs et contient de 1 à 20 atomes de carbone.

3. Colles et masses d'étanchéité à durcissement anaérobie selon la revendication 1, dans lesquelles le groupement amide consiste en un reste aliphatique qui peut être interrompu par des hétéroatomes et/ou former un cycle avec l'atome d'azote d'amide, le nombre des atomes de carbone allant jusqu'à 18 et se situant de préférence entre 2 et 8.

4. Colles et masses d'étancheité à durcissement anaérobie selon l'une des revendications 1 à 3, caractérisées en ce que l'acide cyanacétique ou son ester ou amide est présent en quantité de 0,01 à 10% en poids, plus spécialement de 0,1 à 5% en poids par rapport aux esters (méth)acryliques.

5. Colles et masses d'étanchéité à durcissement anaérobie selon l'une des revendications 1 à 4, caractérisées en ce qu'elles contiennent en outre des amines organiques en tnat qu'accélérateurs auxiliaires.